Europäisches Patentamt

European Patent Office

Office européen des brevets

(19)

(11) Numéro de publication : **0 006 373**
**B1**

# (12) FASCICULE DE BREVET EUROPÉEN

(45) Date de publication du fascicule du brevet :
**13.01.82**

(21) Numéro de dépôt : **79400349.1**

(22) Date de dépôt : **01.06.79**

(51) Int. Cl.³ : **C 08 L 61/06, C 08 K 3/38**

(54) Solutions d'anhydride borique et leur utilisation comme durcisseurs de résols formo-phénoliques.

(30) Priorité : **19.06.78 FR 7818279**

(43) Date de publication de la demande :
**09.01.80 (Bulletin 80/01)**

(45) Mention de la délivrance du brevet :
**13.01.82 Bulletin 82/02**

(84) Etats contractants désignés :
**AT BE CH DE GB IT LU NL SE**

(56) Documents cités :
**FR - A - 1 524 731**
**FR - A - 2 016 760**
**GB - A - 1 144 192**

(73) Titulaire : **Société Chimique des Charbonnages**
**Tour Aurore Place des Reflets Cedex no 5**
**F-92080 Paris La Défense 2 (FR)**

(72) Inventeur : **Meyer, Nicolas**
**1, boulevard de la Salle des Fêtes**
**F-62160 Bully Les Mines (FR)**
Inventeur : **Foulon, Raymond**
**16, rue de Chatellerault**
**F-62700 Bruay en Artois (FR)**

(74) Mandataire : **Fourquet, Antoinette et al**
**Tour Aurore Service Propriété Industrielle Place des**
**Reflets Cedex 5**
**F-92080 Paris La Defense (FR)**

EP 0 006 373 B1

Imprimerie Jouve, 18, rue St-Denis, 75001 Paris, France

**0 006 373**

Solutions d'anhydride borique et leur utilisation comme durcisseurs de résols formo-phénoliques

La présente invention concerne des solutions d'anhydride borique (B$_2$O$_3$) et l'utilisation desdites solutions comme durcisseurs de résols formo-phénoliques.

L'anhydride borique (B$_2$O$_3$) est un produit qui a des nombreuses utilisations telles que comme ignifugeant, déshydratant, catalyseur ou cocatalyseur. Il se présente à l'état solide et est utilisé généralement sous cette forme (particules, grains, poudres plus ou moins fines) car on ne connaît pas de solvants dans lesquels il ait une solubilité notable c'est-à-dire au moins égale à 5 %. Pour des raisons de facilité de manutention et de dispersion de l'anhydride borique dans les mileux auxquels il doit être ajouté, il serait souhaitable de pouvoir l'utiliser sous une forme liquide, c'est-à-dire sous forme de solutions de préférence concentrées. C'est là l'un des objets de la présente invention.

La demanderesse a constaté de façon surprenante qu'il est possible d'obtenir des solutions anhydres présentant des concentrations élevées d'anhydride borique dans un ou plusieurs solvants organiques à condition d'être en présence d'au moins un acide choisi parmi l'acide sulfurique concentré et les acides sulfoniques aromatiques. On a en effet trouvé que l'anhydride borique qui se dissout en très faible quantité dans un acide seul ou dans un solvant organique seul, peut l'être en quantité notablement plus élevée lorsqu'il est dissous dans un ou plusieurs solvants organiques en présence d'au moins un acide.

Les solutions obtenues sont anhydres car l'eau provoque l'hydrolyse de l'anhydride borique. Lesdites solutions sont le plus souvent limpides cependant, parfois, notamment du fait de la présence de traces d'humidité, il y a hydrolyse d'un peu d'anhydride et on voit apparaître une certaine turbidité.

La concentration en anhydride borique des solutions est variable et dépend à la fois du ou des solvants de l'acide utilisés. Il n'y a aucune difficulté à obtenir des solutions anhydres limpides contenant jusqu'à 40 % en poids d'anhydride borique.

Les « solvants organiques » utilisables selon l'invention sont des composés mono ou polyalcools, les trialkylborates ou les diacétals du formol. Les composés qui conviennent plus particulièrement sont par exemple le méthanol, l'éthanol, le propanol, le butanol, l'éthylène glycol, le propylèneglycol..., le borate de triméthyle (B(OCH$_3$)$_3$), le méthylal (CH$_2$(OCH$_3$)$_2$).

De préférence, on utilise le mélange constitué par le borate de triméthyle et le méthanol ou encore le borate de triméthyle et le méthylal : ces mélanges permettent d'augmenter de 10 fois la vitesse de dissolution de l'anhydrique borique. De plus, ce sont en particulier des produits commercialement facilement accessibles, donc peu coûteux. C'est en particulier le cas du mélange de triméthylborate et de méthanol.

La présence d'une quantité d'acide même très faible améliore la solubilité de l'anhydride borique dans le solvant. La solubilité de l'anhydride borique croît avec la quantité d'acide ajoutée. Dans la pratique, on utilise une quantité d'acide d'au moins 5 % et d'au plus 70 % en poids par rapport à la solution d'anhydride borique. Pour des quantités d'acide inférieures à 5 %, l'utilisation comme catalyseur des résols introduit des quantités trop grandes de solvant qu'il faut ensuite éliminer. Lorsque les solutions contiennent plus de 70 % d'acide, le système catalytique est trop énergique. On utilise en général de préférence des solutions contenant au moins 10 % et de préférence 15 à 50 % d'acide. Comme acide sulfonique aromatique utilisable selon l'invention, on peut citer de façon non limitative les acides paratoluène sulfonique, benzène sulfonique et xylène sulfonique.

Les combinaisons utilisées selon l'invention et comportant d'une part « un ou plusieurs solvants organiques » tels que défini ci-dessus et d'autre part, au moins un acide choisi parmi l'acide sulfurique et les acides sulfoniques aromatiques présentent, vis-à-vis de l'anhydride borique, un pouvoir solvant (défini comme la concentration maximum d'anhydride borique pouvant être dissous dans la solution) nettement supérieur à celui de chacun des constituants desdites combinaisons.

La réalisation des solutions selon l'invention peut s'effectuer par tous les moyens connus, les divers constituants étant ajoutés les uns aux autres dans un ordre quelconque en respectant les règles normales connues des hommes de l'art, notamment pour l'utilisation de l'acide sulfurique concentré. Le mélange s'effectue sous agitation, à température ambiante.

La présente invention concerne également une utilisation des solutions obtenues comme durcisseurs de résols formo-phénoliques.

La demande de brevet français 75/34448 déposée le 12 novembre 1975 et la demande additionnelle 76/15068 déposée le 19 mai 1976 décrivent un procédé de fabrication de stratifiés fibres de verre/résols formo-phénoliques consistant à projeter simultanément sur un moule un résol formo-phénolique, un durcisseur dudit résol, des fibres de verre et un agent déshydratant qui peut être notamment de l'anhydride borique.

Ce procédé présente, sur le plan industriel, deux difficultés technologiques, la première est liée à l'obligation d'une projection simultanée de produits sous forme liquide et de produits solides avec nécessité de doser de façon précise la quantité de l'un des produits solides (B$_2$O$_3$) utilisés et la deuxième provient de la quasi-obligation d'employer la technique de moulage par projection des ingrédients.

L'utilisation des solutions selon l'invention permet de surmonter ces difficultés d'une part par l'utilisation d'un durcisseur acide sulfurique et/ou sulfonique aromatique, qui contient l'anhydride borique en proportion bien déterminée et qui est aisément manipulable du fait de sa forme liquide et,

2

**0 006 373**

d'autre part, en offrant la possibilité supplémentaire de réaliser les pièces par injection ou par moulage à la presse à chaud ou à froid. Toutes les solutions selon l'invention sont utilisables, il conviendra simplement que l'homme de l'art choisisse des solutions dont le solvant sera compatible avec la solution aqueuse du résol utilisé.

Les solutions selon l'invention sont utilisables comme durcisseurs de tous les résols connus, que ce soit un résol classique préparé par condensation de formol sur le phénol en présence d'un catalyseur alcalin ou que ce soit un résol plus sophistiqué contenant des additifs tels que des tensio-actifs ou des plastifiants par exemple. Les solutions selon l'invention pourront être utilisées comme seuls catalyseurs pour le résol et, dans le cas, il conviendra que la concentration en acide soit de préférence au moins égale à 15 % en poids : en effet, si la concentration en acide est inférieure à 15 %, on est amené à utiliser des quantités trop importantes de solvants. Mais évidemment, il est possible d'utiliser, en plus des solutions selon l'invention, d'autres catalyseurs acides.

De même, la concentration de $B_2O_3$ dans les solutions utilisables doit être relativement élevée et est de préférence comprise entre 10 et 35 % en poids par rapport à la solution.

Les exemples suivants illustrent l'invention. Les quantités sont exprimées en parties en poids.

## Exemple 1

On prépare à température ambiante des solutions en introduisant, sous agitation, de l'anhydride borique en poudre dans divers acides et solvants. Le tableau 1 donne les solubilités de l'anhydride borique.

TABLEAU 1

| Composés | Solubilité anhydride borique |
|---|---|
| Acide sulfurique 95 % | 2,25 % |
| Methylal | 1,4 % |
| Methanol | 2 % |
| Ethanol | 2,6 % |
| Dipropylène glycol | 0,8 % |
| Borate de triméthyle | 3,5 % |
| Mélange : borate de triméthyle 70 % méthanol 30 % | 4,5 % |
| Mélange : borate de triméthyle 70 % Isopropanol 30 % | 2,00 % |
| Mélange : borate de triméthyle 70 % butanol 30 % | 1,5 % |

## Exemple 2

L'exemple 1 est répété en mettant en œuvre des mélanges d'acide et de solvants. Le tableau 2 donne la solubilité de l'anhydride borique à température ambiante.

TABLEAU 2

| Composés | Quantité acide ajoutée | Solubilité anhydride borique |
|---|---|---|
| Borate de triméthyle | + 5 % acide paratoluène sulfonique | 24 % |
| Borate de triméthyle | + 20 % | 40 % |
| Borate de triméthyle | + 40 % | 46 % |
| Borate de triméthyle | + 60 % | 60 % |

0 006 373

| Composés | Quantité acide ajoutée | Solubilité anhydride borique |
|---|---|---|
| Mélange : borate de triméthyle 70 % | + 5 % acide sulfurique | 16,5 % |
| méthanol 30 % | | |
| méthanol 30 % | + 20 % | 37,- % |
| méthanol 30 % | + 40 % | 48,- % |
| méthanol 30 % | + 60 % | 60,- % |

| Composés | Quantité acide ajoutée | Solubilité anhydride borique |
|---|---|---|
| Méthylal | + 5 % paratoluène sulfonique | 26 % |
| Méthylal | + 20 % | 30 % |
| Méthylal | + 30 % | 38 % |
| Méthylal | + 60 % | 60 % |

## Exemple 3

L'exemple 2 est répété en utilisant des mélanges de solvants.

| Composés | Quantité acide | Solubilité anhydride borique |
|---|---|---|
| Borate de triméthyle : 100 parties Méthanol : 30 parties | Acide paratoluène sulfonique : 5 parties | 43 % |
| Borate de triméthyle : 100 parties Ethanol : 30 parties | Acide paratoluène sulfonique : 30 parties | 47 % |
| Borate de triméthyle : 100 parties Isopropanol : 30 parties | Acide paratoluène sulfonique : 30 parties | 48 % |
| Borate de triméthyle : 100 parties Butanol : 30 parties | Acide paratoluène sulfonique : 30 parties | 58 % |

## Exemple 4

Les solutions sont préparées à température ambiante en introduisant sous agitation de l'anhydride borique en poudre dans une solution d'acide sulfurique à 98 % ou d'un acide sulfonique aromatique dans un solvant.

On obtient ainsi des solutions limpides dont la composition est donnée dans le tableau 3.

## Exemple 5

Utilisation des solutions selon l'invention.

On utilise les résols tels que décrits dans le tableau 4. Ils sont préparés par condensation en présence de soude de formol sur du phénol puis neutralisation du produit obtenu jusqu'à pH 7 et séchage sous vide jusqu'à obtention de la viscosité désirée.

4

Le résol R$_1$ est utilisé tel quel ; le résol R$_2$ est dilué dans du méthanol (5 parties pour 100 parties de résols) pour donner un produit ayant une viscosité de 0,8 Pa.s (8 poises) à 20 °C et dénommé R'$_2$ ; le résol R$_3$ est dilué avec du dipropylèneglycol (12 parties pour 100 parties de résols) pour donner un produit ayant une viscosité de 1,5 Pa.s (15 poises) à 20 °C et dénommé R'$_3$.

Dans le tableau 4, l'extrait sec indiqué est obtenu par étuvage de 4 g de résol pendant 3 heures à 140 °C.

On mélange les divers résols ainsi obtenus avec les solutions durcissantes de l'exemple 4 ; le mélange s'effectue à 25 °C et on mesure le temps de vie en pot à cette température.

Les résultats obtenus sont rassemblés dans le tableau 5.

## Exemple 6

A l'aide du résol R$_3$ et des solutions S$_1$-S$_{10}$-S$_{13}$-S$_{14}$-S$_{15}$-S$_{16}$ on a préparé sans difficulté des stratifiés à base de mat de verre par la technique de projection simultanée des ingrédients telle que décrite dans les brevets antérieurs ci-dessus mentionnés, par injection ou par imprégnation. Dans tous les cas, les produits obtenus présentaient une bonne homogénéité, un bon aspect de surface.

### TABLEAU 3

| Solutions Composés | S$_1$ | S$_2$ | S$_3$ | S$_4$ | S$_5$ | S$_6$ | S$_7$ | S$_8$ | S$_9$ | S$_{10}$ | S$_{11}$ | S$_{12}$ | S$_{13}$ | S$_{14}$ | S$_{15}$ | S$_{16}$ |
|---|---|---|---|---|---|---|---|---|---|---|---|---|---|---|---|---|
| B(OCH$_3$)$_3$ | 45,4 | 34,7 | 40,3 | 47,6 | 47,1 | 57,2 | 55,6 | 40,9 | 34,1 | — | — | — | — | — | — | — |
| CH$_2$(OCH$_3$)$_2$ | — | — | — | — | — | — | — | — | — | 40,8 | 50 | 50 | 43,5 | 55,9 | 43,2 | — |
| CH$_3$OH | — | — | — | — | — | — | — | — | 16,7 | — | — | — | — | — | — | 47 |
| H$_2$SO$_4$ | — | — | — | — | — | — | — | — | — | — | — | — | — | 17,9 | 5,4 | — |
| ATS(*) | 27,3 | 48,6 | 40,3 | 33,3 | 29,4 | 21,4 | 19,4 | 27,3 | 22,8 | 32,6 | — | — | 30,4 | — | 24,3 | 42,4 |
| ABS(*) | — | — | — | — | — | — | — | — | — | — | 30 | — | — | — | — | — |
| AXS(*) | — | — | — | — | — | — | — | — | — | — | — | 30 | — | — | — | — |
| B$_2$O$_3$ | 27,3 | 16,7 | 19,4 | 19,1 | 23,5 | 21,4 | 25 | 31,8 | 26,4 | 26,6 | 20 | 20 | 26,1 | 26,2 | 27,1 | 10,6 |

(*) ATS : Acide paratoluène sulfonique
(*) ABS : Acide benzène sulfonique
(*) AXS : Acide xylène sulfonique
Les quantités sont en % en poids

### TABLEAU 4

| Résol | Rapport molaire Formol/phénol | Condensation Température °C | Condensation Temps min. | Viscosité à 20 °C × 0,1 Pa.s (Poises) | Extrait sec % en poids |
|---|---|---|---|---|---|
| R$_1$ | 1,5 | ébullition | 45 - 50 | 25 - 30 | 72 - 76 |
| R$_2$ | 1,5 | ébullition | 65 - 75 | 28 | 72 - 73 (après dilution R'$_2$) |
| R$_3$ | 1,5 | ébullition | 35 | 25 | 74 (après dilution R'$_3$) |

### TABLEAU 5

| Résol | | | | | | | | | | | | |
|---|---|---|---|---|---|---|---|---|---|---|---|---|
| Nature | R$_1$ | R$_1$ | R$_1$ | R'$_2$ | R'$_2$ | R'$_2$ | R'$_3$ | R'$_3$ | R'$_3$ | R'$_3$ | R'$_3$ |
| Quantité (G) | 100 | 100 | 100 | 100 | 100 | 100 | 100 | 100 | 100 | 100 | 100 |
| Solution de durcisseur — Nature | S$_1$ | S$_{14}$ | S$_{15}$ | S$_1$ | S$_{14}$ | S$_{15}$ | S$_1$ | S$_1$ | S$_{14}$ | S$_{15}$ | S$_{16}$ |
| Solution de durcisseur — Quantité (G) | 20 | 20 | 20 | 20 | 20 | 20 | 20 | 15 | 20 | 20 | 20 |
| Temps de vie en pot à 25 °C (minutes) | 13 | 20 | 10 | 5 | 10 | 4 | 7 | 12 | 7 | 5 | 30 |

**Revendications**

1. Solutions d'anhydride borique concentrées caractérisées en ce qu'elles contiennent au moins 5 % en poids d'anhydride borique, un ou plusieurs solvants organiques choisis parmi les mono ou les polyalcools, les trialkylborates, les diacétals de formol et au moins un acide qui est choisi parmi l'acide sulfurique et les acides sulfoniques à noyau aromatique.

2. Solutions selon la revendication 1 caractérisées en ce que l'acide est présent à raison d'au moins 10 % en poids par rapport à la solution.

3. Solutions selon l'une des revendications 1 et 2 caractérisées en ce que le solvant est choisi parmi le méthanol, le triméthylborate et le méthylal.

4. Utilisation des solutions selon l'une des revendications 1 à 3 caractérisée en ce que lesdites solutions sont employées comme durcisseur de résols et ou de résols et des fibres de verre pour la réalisation de pièces finies.

**Claims**

1. Concentrated solutions of boric anhydride characterised in that they contain at least 5 % by weight of boric anhydride, one or more organic solvents chosen from monoalcohols or polyalcohols, trialkyl borates, formaldehyde diacetals and at least one acid chosen from aromatic-nucleus sulphonic acids and sulphuric acid.

2. Solutions according to claim 1, characterised in that the acid is present in the ratio of at least 10 % by weight relatively to the solution.

3. Solutions according to one of claims 1 and 2, characterised in that the solvent is chosen from methanol, trimethyl borate and methylal.

4. Use of solutions according to one of claims 1 to 3, characterised in that the said solutions are used as hardening or setting agents for resols and/or resols and glass fibre materials for the production of finished articles.

**Ansprüche**

1. Konzentrierte Borsäureanhydridlösungen, dadurch gekennzeichnet, daß sie mindestens 5 Gew.-% Borsäureanhydrid, ein oder mehrere organische Lösungsmittel, ausgewählt aus der Gruppe Mono- oder Polyalkohole, Trialkylborate und Formoldiacetal, und mindestens eine Säure, ausgewählt aus der Gruppe Schwefelsäure und Sulfonsäuren mit aromatischem Kern, enthalten.

2. Lösungen nach Anspruch 1, dadurch gekennzeichnet, daß die Säure in einer Menge von mindestens 10 Gew.-%, bezogen auf das Gewicht der Lösung, vorliegt.

3. Lösungen nach Anspruch 1 oder 2, dadurch gekennzeichnet, daß das Lösungsmittel aus der Gruppe Methanol, Trimethylborat und methylat ausgewählt ist.

4. Verwendung der Lösungen nach einem der Ansprüche 1-3, dadurch gekennzeichnet, daß diese Lösungen als Härtungsmittel fur Resolharze und/oder glasfaserverstärkte Resolharze zur Herstellung von Fertigprodukten eingesetzt werden.